# EUROPEAN PATENT SPECIFICATION

(11) **EP 1 676 930 B1**
(45) Date of publication and mention of the grant of the patent: **30.06.2010**
(21) Application number: 06005522.5
(22) Date of filing: 09.08.2001
(51) Int. Cl.: C22B 1/248, C22B 1/24

(54) **A method for forming a briquette for use as a steelmaking material**
Verfahren zur Herstellung eines Briketts zur Verwendung als Werkstoff für die Staglherstellung
Procedure de fabrication d'une briquette pour utilisation en tant que materiaux dans la fabrication d'acier.

(30) Priority: 10.08.2000 JP 2000243458; 10.08.2000 JP 2000243467; 10.08.2000 JP 2000243468; 11.10.2000 JP 2000310747
(43) Date of publication of application: 05.07.2006
(62) Divisional of application: 01955616.6
(73) Proprietor: JTEKT Corporation, Osaka-shi Osaka 542-8502 (JP)
(72) Inventor: Ishihara, Masataka, Kitakatsuragi-gun Nara 636-0014 (JP); Maemoto, Akio, c/o JTEKT Corporation, Osaka-shi, Osaka 542-8502 (JP); Matsuda, Mitsuma, Kagawa-Gun Kagawa 761-1702 (JP); Seo, Yoshihiro, Ikoma-Gun Nara 636-0822 (JP); Kashino, Shouichi, Itano-Gun, Tokushima 771-1222 (JP)
(74) Representative: Sajda, Wolf E.

(56) References cited:
- DE-C- 250 891
- US-A- 2 376 706
- US-A- 2 759 808
- US-A- 3 316 083
- US-A- 4 369 062

## Description

### Technical Field

The present invention relates to a method for forming a briquette for use as steelmaking material, and more particularly to a technique for effectively utilizing grinding chips from an iron-based metal.

### BACKGROUND ARTS

Grinding chips which occur in the machining of an iron-based metal such as bearing steel, carburized steel and the like (hereinafter, the term "machining" will be used to represent a concept also including grinding, super-finishing grinding, lapping and the like) are recovered in the form of cotton-like (fibrous) aggregates including a grinding fluid containing water and oil, abrasive grains, and the like. Since the cotton-like aggregates contain a considerable quantity of pure iron, there have been made attempts to reuse the aggregates as steelmaking material. Unfortunately, however, the cotton-like aggregates contain such a large quantity of water that bumping (phreatic explosion) will be caused by the water if the aggregates are directly charged into a blast furnace. It may be contemplated to remove the water from the cotton-like aggregates by centrifugation or the like. In this case, however, the oil contained in the cotton-like aggregates is also removed along with the water and hence, the pure iron as a component of the grinding chips is converted to iron oxide due to the self heating of the cotton-like aggregates. Therefore, the resultant aggregates need be reduced so as to be reused as steelmaking material. The use of a reducing agent results in increased costs.

On the other hand, the grinding chips with the oil adhered thereto are prone to adhered to each other. Hence, the compression molding of the cotton-like aggregates involves difficulty about accomplishing solidification to a desired strength. Furthermore, in the case of cotton-like aggregates containing a large quantity of grinding chips from an iron-based metal containing not less than 0.2 wt% of carbon, the aggregates present such a great springback when compressed that it is difficult to accomplish the solidification to a desired strength by compression molding the aggregates. Accordingly, if such compacted cotton-like aggregates are charged into the blast furnace, the aggregates are scatteringly carried upward so that most of them is collected by a dust collector.

In addition, the fibrous grinding chips contained in the cotton-like aggregates are hard to crush by means of a hammer mill or the like and hence, the cotton-like aggregates cannot be sheared finely. This leads to a difficulty of processing the cotton-like aggregates into briquettes or the like.

In reality, therefore, the cotton-like aggregates are not put to reuse but committed to a waste processing contractor for landfill disposal.

In a steel making process including a smelting step and the like, there occur dusts bearing iron and heavy metals. Hence, it is a general practice to collect such dusts as recovery dusts (OG dusts) (see, for example, Unexamined Japanese Patent Publication No.7(1995)-97638). Unfortunately, if such recovery dusts are directly charged into the blast furnace, the dusts are scatteringly carried upward to be collected by the dust collector again. As a result, the dusts are not put to reuse but committed to the landfill disposal.

However, the landfill disposal is not desirable from the standpoint of the effective utilization of resources. Furthermore, the landfill disposal entails the environmental deterioration as well as the increase of the disposal cost. The recovery dusts, in particular, requires an even greater disposal cost because the dusts contain heavy metals and must be committed to the landfill disposal as special industrial wastes.

US 4369062 discloses a method of making briquettes having approximately 50% metallic fines, 41% mill scale, 2% bentonite, 3% pitch residue 2% burnt lime fines and 2% molasses.

It is an object of the invention to provide a method for forming a briquette for use as steelmaking material permitting an effective reuse of grinding chips.

It is another object of the invention to provide a method for forming a briquette for use as steelmaking material permitting an effective reuse of recovery dusts along with the grinding chips.

### DISCLOSURE OF THE INVENTION

The object is solved by means of a method as specified in claim 1. Further developments thereof are indicated in the subclaims.

A method for forming a briquette for use as steelmaking material according to the invention comprises in this order: a step of compression molding cotton-like aggregates containing grinding chips from an iron-based metal and a grinding fluid containing oil and water, thereby forming a brittle compact in which the fibrous grinding chips are roughly sheared and which is removed of excessive water and oil; a step of crushing the brittle compact for further finely shearing the grinding chips, and mixing the resultant grinding chips with a solidification assistant for obtaining powder containing the solidification assistant; a step of forming a briquette by compression molding a predetermined amount of the powder for solidification; and step of drying the resultant briquette (Claim 9).

According to the so-arranged method for forming the briquette for use as steelmaking material, the rough shearing of the fibrous grinding chips, which is hard to accomplish by the prior art, can be done easily by compression molding the cotton-like aggregates. In the step of crushing the brittle compact, the rough shearing of the fibrous grinding chips in the brittle compact have been done previously so that the grinding chips can be sheared in an easy and effective manner. Thus, the fine powdery particles can be obtained in an easy and positive manner. Furthermore, because of the solidification assistant present in the powder, the solidification to a desired strength can be achieved simply by compression molding the powder. In addition, the aforementioned steps are performed as retaining the oil contained in the grinding fluid and hence, the oxidization of the pure iron as a component of the grinding chips can be suppressed. Therefore, the cotton-like aggregates can be reused as a high-quality steelmaking material, thus contributing to the environmental conservation as well as to the reduction of disposal cost of the grinding chips.

It is preferred that at least one selected from the group consisting of rice polishings, blackstrap molasses, starches, calcined lime, coloidal silica, silicate of soda, aluminum phosphate, vinyl acetate sludge, asphalt emulsion and bentonite is employed as the solidification assistant by the above method for forming the briquette for use as steelmaking material. The assistant provides the easy and rigid solidification of the powder containing oil. Thus is obtained the briquette for use as steelmaking material which features easy handlings such as transportation, storage and the like.

In the above method for forming the briquette for use as steelmaking material, it is preferred that the solidification assistant is admixed in an amount of 2 to 30 wt%. This provides an even more rigid solidification of the powder. Thus is obtained the briquette for use as steelmaking material featuring even easier handlings such as transportation, storage and the like.

In the above method for forming a briquette for use as steelmaking material, it is preferred that in the mixing step, the resultant grinding chips are mixed with coke and a solidification assistant for obtaining powder containing the coke and solidification assistant.

In the method, because of the effect of the coke and the solidification assistant present in the powder, the quite rigidly solidified briquette for use as steelmaking material can be obtained simply by compression molding the powder.

In the above method for forming the briquette for use as steelmaking material, the crushed brittle compact may be further admixed with recovery dusts collected in a steelmaking process. This permits the recovery dusts to be reused together with the grinding chips after solidification, thus contributing to the environmental conservation as well as to the reduction of the disposal cost of the recovery dusts.

In this method for forming the briquette for use as steelmaking material, it is preferred that the recovery dusts are admixed in an amount of 10 to 30 wt%. This permits a briquette of a desired hardness to be formed easily. It is preferred that at least one selected from the group consisting of rice polishings, blackstrap molasses, starches, calcined lime, coloidal silica, silicate of soda, aluminum phosphate, vinyl acetate sludge, asphalt emulsion and bentonite is employed as the solidification assistant. The assistant provides an easy and stable solidification of the powder containing oil. It is further preferred that the solidification assistant is admixed in an amount of 1 to 10 wt%. This provides an even easier and more stable solidification of the powder. On the other hand, it is further preferred that the coke is admixed in an amount of 5 to 50 wt% . This permits the briquette for use as steelmaking material to be solidified even more rigidly.

In all of the aforementioned methods for forming the briquette for use as steelmaking material, it is preferred that the employed cotton-like aggregates are adjusted for the content of water to less than 50 wt% and for the content of oil to less than 10 wt%. This results in easy handlings, such as transportation and the like, of the cotton-like aggregates and also permits excessive water and oil to be readily and adequately removed from the brittle compact only by the compression molding.

In all of the aforementioned methods for forming the briquette for use as steelmaking material, it is preferred that the brittle compact is adjusted for the content of water to 2 to 12 wt% and for the content of oil to 1 to 5 wt%. In this case, the brittle compact can be solidified to a suitable hardness while the oxidization of the grinding chips can be effectively suppressed by the minimum amount of residual oil.

In all of the aforementioned methods for forming the briquette for use as steelmaking material, it is preferred that immediately after the compression molding, the briquette is subjected to quick cooling. This permits the briquette to be solidified in an easy and stable manner.

In all of the aforementioned methods for forming the briquette for use as steelmaking material, it is preferred that a product substantially shaped like a pillow is obtained as the briquette. In this case, there may be obtained a briquette which has a high compressive strength and is less likely to incur partial fracture and which features even more easier handlings such as transportation, storage and the like.

In all of the aforementioned methods for forming the briquette for use as steelmaking material, a material containing not less than 0.2 wt% of carbon may be employed as the grinding chips. In the case of cotton-like aggregates containing the grinding chips having such a great springback, as well, the cotton-like aggregates can be rigidly solidified while eliminating the influence of the springback.

### BRIEF DESCRIPTION OF THE DRAWINGS

Fig.1 is a partially cut-away perspective view showing a briquette for use as steelmaking material obtained by a method according to the invention.
Fig.2 is a group of diagrams showing steps of a method for forming the briquette for use as steelmaking material according to one embodiment of the invention.
Fig.3 is a group of diagrams showing steps of a method for forming the briquette for use as steelmaking material according to another embodiment of the invention.
Fig. 4 is a group of diagrams showing steps of a method for forming the briquette for use as steelmaking material according to still another embodiment of the invention.

### BEST MODES FOR CARRYING OUT THE INVENTION

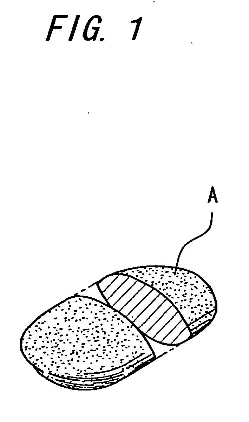

Fig.1 is a partially cut-away perspective view showing a briquette for use as steelmaking material obtained by a method according to the invention. The briquette A contains powdery pure iron and oil, and is formed by solidifying powder using a solidification assistant, the powder obtained by finely shearing cotton-like aggregates containing grinding chips from an iron-based metal and a grinding fluid containing oil and water; and drying the solidified product for removal of the water. The briquette A is substantially shaped like a pillow.

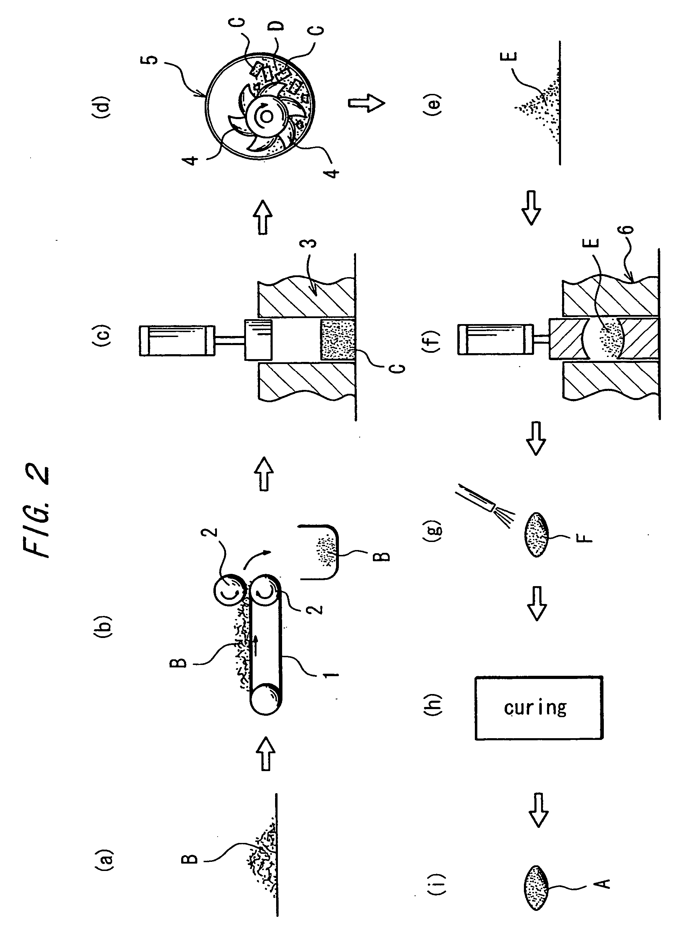

Fig. 2 is a group of diagrams showing steps of a method for forming the briquette A. In the forming of the briquette A, cotton-like aggregates B (see Fig.2(a)) of grinding chips produced by machining an iron-based metal are first compressed for preparatory adjustment of contents of water and oil which are components of the grinding fluid contained in the cotton-like aggregates B. The cotton-like aggregates B are compressed by, for example, being clamped between a pair of rollers 2 as being carried on a belt conveyor 1 (see Fig.2(b)). It is preferred in this process that the cotton-like aggregates are adjusted for the content of water to less than 50 wt% and for the content of oil to less than 10 wt%. This facilitates the handlings, such as transportation, storage and the like, of the cotton-like aggregates B.

Next, the cotton-like aggregates B thus adjusted for the contents of water and oil are compression molded in a mold 3 using a press thereby forming a brittle compact C (see Fig.2(c)). The grinding chips shaped like spiral fiber contained in the cotton-like aggregates B are roughly sheared by the compression molding. Additionally, excessive water and oil are removed such that the brittle compact C is adjusted for the content of water to 2 to 12 wt% and for that of oil to 1 to 5 wt%. Thus, the oxidization of the grinding chips is effectively suppressed by the minimum possible amount of residual oil. Furthermore, the cotton-like aggregates B have been adjusted for the content of water to less than 50 wt% and for the content of oil to less than 10 wt% in the pervious step and hence, the contents of water and oil in the brittle compact C can be easily and properly adjusted only by the compression molding.

The brittle compact C is formed in a shape easy to handle, such as circular cylinder, sphere, prism or the like, and is compacted to such a strength as not to collapse when sent to the subsequent step.

Next, the brittle compact C together with a solidification assistant D are charged in a mixer 5 equipped with a chopper having rotary blades 4 (or a Henschel mixer) for crushing (see Fig.2(d)). Thus, the grinding chips in the brittle compact C are further finely sheared (finishing shearing) and thus is obtained powder E containing powdery pure iron and the solidification assistant D (see Fig.2(e)). The powdery pure iron has a greater diameter of the order of 3 to 1000 µm. In the crushing of the brittle compact C, the finishing shearing can be smoothly done because the fibrous grinding chips in the brittle compact C have previously been subjected to the rough shearing. In a case where the fibrous grinding chips in the brittle compact C are not roughly sheared, it is extremely difficult to crush the compact C by means of the mixer 5. Accordingly, it is impossible to obtain the fine powder E.

As the solidification assistant D, there may preferably be employed one or more than one selected from the group consisting of rice polishings (refined rice polishings), blackstrap molasses such as from sugar cane, starches such as potato starch, corn starch and the like, calcined lime, coloidal silica, silicate of soda, aluminum phosphate, vinyl acetate sludge, asphalt emulsion, and bentonite. The solidification assistant D may preferably be present in concentrations of 2 to 30 wt%. The rice polishings and blackstrap molasses are particularly preferred as the solidification assistant D because they are effective to prevent the powdery pure iron from being altered in quality and are less costly. After kneading, the asphalt emulsion is separated into an asphalt component and water, the asphalt component presenting caking which develops strength. Anionic asphalt is preferably used in the asphalt emulsion.

Subsequently, a predetermined amount of the above powder E is compression molded in a mold 6 using a press (see Fig.2(f)), thereby forming a water-containing briquette F which contains a large quantity of pure iron and is substantially shaped like a pillow. In the compression molding of the powder E, the pure iron particles with oil adhered thereto are firmly bonded together via the water contained in the solidification assistant D and powder E whereby the powder E can be solidified. Particularly, in a case where the powder E contains 5 to 6 wt% of water, 4 wt% of rice polishings and 2 wt% of blackstrap molasses or where the powder E contains 7 to 15 wt% of water and 2 to 10 wt% of vinyl acetate sludge, there may be obtained a water-containing briquette F more rigidly solidified.

The phrase "substantially shaped like a pillow" means a shape having a rounded circumferential edge and gradually increased in thickness from the circumferential edge toward its center, the shape including those of eggs, almond, rugby ball and the like. Forming the powder into such a shape gives the briquette A which is hard to collapse withstanding the compressive load and is less likely to incur partial fracture at a corner portion thereof or the like.

Immediately after the compression molding, the water-containing briquette F is subjected to quick cooling by applying thereto air blow at normal temperatures or cooled air blow (see Fig.2(g)). This provides an easy and stable solidification of the water-containing briquette F. Subsequently, the water-containing briquette F is cured (dried) for removal of the water contained therein (see Fig.2(h)). Thus is obtained the briquette A for use as steelmaking material (see Fig.2(i)). It is preferred to perform the curing of the briquette for about two days in the light of the assured removal of the contained water.

The briquette A thus formed has a porous nature resulting from the solidification of the powder E and hence, the water contained therein can be easily and assuredly removed by curing. Accordingly, if the briquette is directly charged into the blast furnace, there is no fear of causing bumping or of being scatteringly carried upward to be discharged. In addition, the oxidization of the pure iron is effectively suppressed because the processing is performed as retaining a part of the oil of the grinding fluid at all times. As to a briquette A formed from cotton-like aggregates B containing grinding chips from a bearing steel (SUJ-2), for example, it is confirmed that the pure iron is present in concentrations of 84 to 95 wt%. Accordingly, the briquette A presents at least 90% of a high smelting yield to be worthy of a high-quality steelmaking material which can be offered to steel makers for pay. Furthermore, the briquette is in the solid form, thus facilitating the transportation and other handlings thereof.

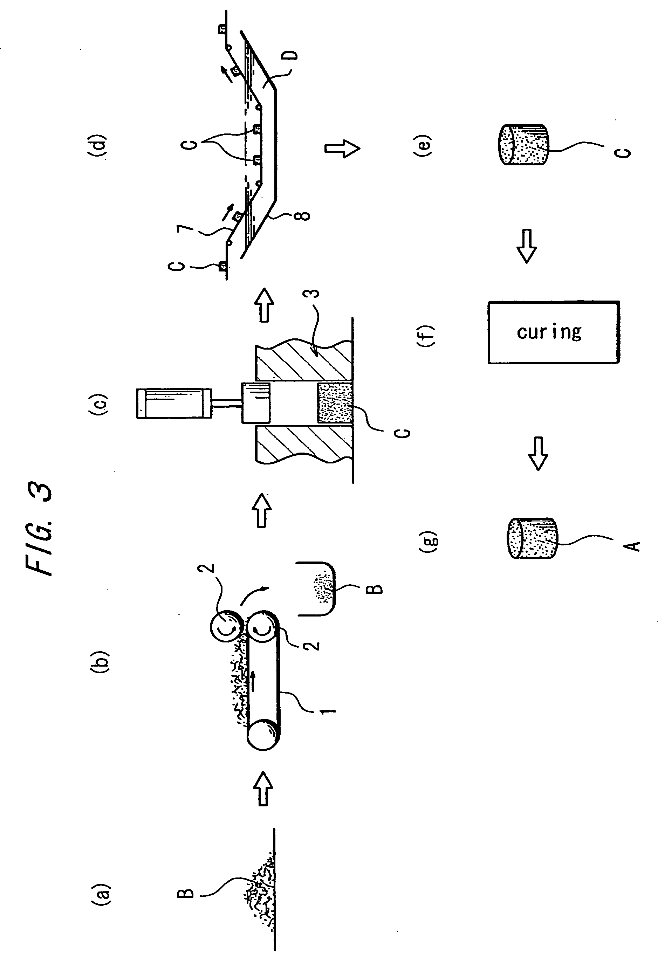

Fig. 3 is a group of diagrams showing steps of another method for forming the briquette A of the invention. This method differs from the method of Fig. 2 in that the step of crushing the brittle compact C is dispensed with. That is, the method forms the brittle compact C from the cotton-like aggregates B just the same way as in the method shown in Fig.2 (see Figs.3(a) to 3(c)). The contents of water and oil of this brittle compact C are the same as those of the compact obtained by the method shown in Fig.2.

Then, the brittle compact C obtained through these steps is impregnated with a solidification assistant D in liquid form. The impregnation with the solidification assistant D is performed by, for example, immersing the brittle compact C in the solidification assistant D filled in a tank 8 as carrying the compact on a belt conveyor 7 (see Fig.3(d)). As the solidification assistant D, there may preferably be employed at least one selected from the group consisting of coloidal silica, silicate of soda, and aluminum phosphate. The solidification assistant D may preferably be impregnated in concentrations of 2 to 30 wt%. This permits the brittle compact C to be readily and rigidly solidified.

Subsequently, the brittle compact C impregnated with the solidification assistant D (see Fig.3(e)) is cured (dried) (see Fig.3(f)), and thus is obtained the briquette A for use as steelmaking material (see Fig.3(g)). For curing, the compact may be quickly cooled by applying thereto air blow at normal temperatures or cooled air blow.

The briquette A thus formed can present the same effect as the briquette A formed by the method shown in Fig.1. In addition, the method shown in Fig.3 is more efficient in forming the briquette A because it omits the step of crushing the brittle compact C.

Besides the circular cylinder shape shown in the figure, the briquette A may also take a substantially pillow-like shape, such as of eggs, almond, rugby ball and the like. The pillow-like shape has a rounded circumferential edge and is gradually increased in thickness from the circumferential edge toward its center.

The methods for forming the briquette shown in Figs. 2 and 3 are preferably applied to the reuse of grinding chips containing not less than 0.2 wt% of carbon. Such grinding chips present a great springback and hence, are hard to solidify. However, the application of the inventive method permits the rigidly solidified briquette A to be formed easily, eliminating the influence of the springback of the grinding chips. A typical example of the grinding chips containing not less than 0.2 wt% of carbon includes grinding chips from a bearing steel.

In the foregoing embodiment, the crushing of the brittle compact C is performed concurrently with the admixing of the solidification assistant D. However, the crushing of the brittle compact C and the admixing of the solidification assistant D may be performed in separate steps.

The briquette A of the invention may further contain coke powder. Alternatively, the inventive briquette A may further contain the coke powder and recovery dust powder collected in the steelmaking process.

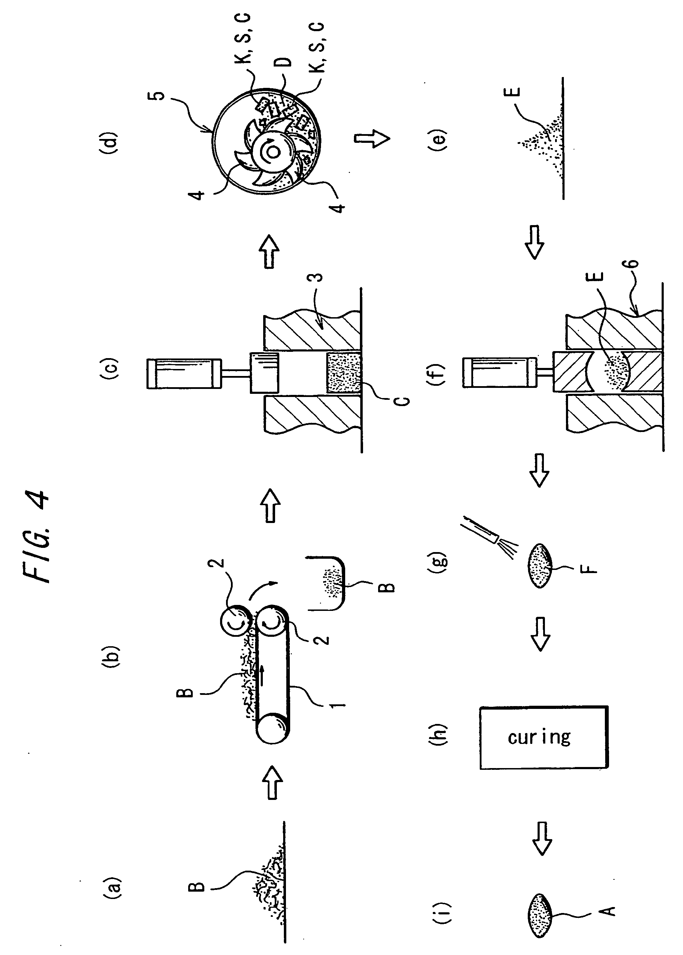

Fig. 4 is a group of diagrams showing steps of a method for forming a briquette A further containing the coke powder and the recovery dust powder. In this method of forming the briquette A, a brittle compact C is formed from the cotton-like aggregates B just the same way as in the method shown in Fig.2 (see Figs.4(a) to 4(c)). The contents of water and oil of the brittle compact C are also the same as those of the compact obtained by the method shown in Fig.2.

Next, the brittle compact C together with coke K, recovery dusts S produced and collected in the steelmaking process, and the solidification assistant D are charged into a mixer 5 equipped with a chopper having rotary blades 4 (or a Henschel mixer) for crushing (see Fig.4(d)). In this step, 50 to 70 wt% of the brittle compact C, 5 to 50 wt% of the coke K, 10 to 30 wt% of the recovery dusts S and 1 to 10 wt% of the solidification assistant D are blended together.

Thus, the grinding chips in the brittle compact C are further finely sheared (finishing shearing), and thus is obtained powder E containing the pure iron, coke K, recovery dusts S and powdery solidification assistant D (see Fig.4(e)).

Similarly to the embodiment shown in Fig.2, one or more than one selected from the group consisting of rice polishings, blackstrap molasses such as from sugar cane, starches, calcined lime, coloidal silica, silicate of soda, aluminum phosphate, vinyl acetate sludge, asphalt emulsion and bentonite are preferably employed as the solidification assistant D. As the recovery dusts S, for example, there may be employed those containing 10 to 55 wt% of iron (total Fe) which are produced and collected in the steelmaking process.

The subsequent steps are the same as those shown in Fig.2. Specifically, a predetermined amount of the above powder E is compression molded by means of, for instance, a roller type molding machine or a cylinder type molding machine 6 (see Fig.4(f)), thereby forming a briquette F substantially shaped like a pillow and containing a large quantity of pure iron. In the compression molding of the powder E, the pure iron particles with oil adhered thereto are firmly bonded together via the water contained in the coke K, solidification assistant D and the powder E whereby the powder E can be solidified. Immediately after the compression molding, the briquette F is subjected to quick cooling by applying thereto air blow at normal temperatures or cooled air blow (see Fig.4(g)). Then, the briquette F is cured (dried) for removal of the water contained therein (see Fig.4(h)) and thus is obtained the briquette A for use as steelmaking material (see Fig.4(i)).

The resultant briquette A is also formed by solidifying the powder E and hence, can be readily and assuredly removed of the water contained therein by curing. Accordingly, if the briquette is directly charged into the blast furnace, there is no fear of causing bumping or of being scatteringly carried upward to be discharged. In addition, the oxidization of the pure iron is effectively suppressed because the processing is performed as retaining a part of the oil of the grinding fluid at all times. Furthermore, the briquette features a higher added value because it further contains the coke K serving as a carburizationmaterial and a reducing agent. What is more, the briquette is in the solid form, thus facilitating the transportation and other handlings thereof.

The above forming method, in particular, provides a more rigidly solidified briquette A for use as steelmaking material because 5 to 50 wt% of coke and 1 to 10 wt% of solidification assistant are admixed. In addition, the method permits the briquette of a desired hardness to be formed easily because the mixing ratio of the recovery dusts is defined to range from 10 to 30 wt%.

The above method for forming the briquette A is also particularly preferably applied to the reuse of the grinding chips containing not less than 0.2 wt% of carbon.

In the above embodiment, the crushing of the brittle compact C is performed concurrently with the admixing of the coke K, recovery dusts S and solidification assistant D. However, the crushing of the brittle compact C and the admixing of the coke K and the like may be performed in separate steps. The above embodiment may be practiced without admixing the recovery dusts S.

## Claims

1. A method for forming a briquette for use as steelmaking material, comprising the following steps in this order:
- a step of compression molding cotton-like aggregates (B) containing grinding chips from an iron-based metal and a grinding fluid containing oil and water, thereby forming a brittle compact (C) in which the fibrous grinding chips are roughly sheared and from which excessive water and oil is removed;
- a step of crushing the brittle compact (C) for further finely shearing the grinding chips, and mixing the resultant grinding chips with a solidification assistant (D) for obtaining powder (E) containing the solidification assistant (D);
- a step of forming a briquette by compression molding a predetermined amount of the powder (E) for solidification; and
- a step of drying the resultant briquette (A).

2. The method according to claim 1,
wherein at least one selected from the group consisting of rice polishings, blackstrap molasses, starches, calcined lime, colloidal silica, silicate of soda, aluminum phosphate, vinyl acetate sludge, asphalt emulsion and bentonite is employed as the solidification assistant (D).

3. The method according to claim 1 or 2,
wherein the solidification assistant (D) is admixed in an amount of 2 to 30 wt%.

4. The method according to any of claims 1 to 3,
wherein in the mixing step, the resultant grinding chips are mixed with coke and a solidification assistant (D) for obtaining powder (E) containing the coke and solidification assistant (D).

5. The method according to any of claims 1 to 4,
wherein the crushed brittle compact (C) is further admixed with recovery dusts collected in a steelmaking process.

6. The method according to claim 5,
wherein the recovery dusts are admixed in an amount of 10 to 30 wt%.

7. The method according to any of claims 1 to 6,
wherein the solidification assistant (D) is at least one selected from the group consisting of rice polishings, blackstrap molasses, starches, calcined lime, colloidal silica, silicate of soda, aluminum phosphate, vinyl acetate sludge, asphalt emulsion and bentonite.

8. The method according to any of claims 1 to 7,
wherein the solidification assistant (D) is admixed in an amount of 1 to 10 wt%.

9. The method according to any of claims 4 to 8,
wherein the coke is admixed in an amount of 5 to 50 wt%.

10. The method according to any of claims 1 to 9,
wherein the employed cotton-like aggregates (B) are adjusted for the content of water to less than 50 wt% and for the content of oil to less than 10 wt%.

11. The method according to any of claims 1 to 10,
wherein the brittle compact (C) is adjusted for the content of water of 2 to 12 wt% and for the content of oil to 1 to 5 wt%.

12. The method according to any of claims 1 to 11,
wherein immediately after the compression molding step the briquette (A) is subjected to quick cooling.

13. The method according to any of claims 1 to 12,
wherein a product substantially shaped like a pillow is obtained as the briquette (A).

14. The method according to any of claims 1 to 13,
wherein a material containing not less than 0.2 wt% of carbon is employed as the grinding chips.

## Patentansprüche

1. Verfahren zum Herstellen eines Briketts zur Verwendung als Material für die Stahlherstellung, wobei das Verfahren die folgenden Schritte in der genannten Reihenfolge aufweist:
- einen Kompressions-Formungsschritt von baumwollartigen Aggregaten (B), die Schleifspäne von einem Metall auf Eisen-Basis und ein öl- und wasserhaltiges Schleiffluid enthalten, um dadurch einen spröden Preßling (C) zu bilden, in dem die faserigen Schleifspäne grob zerkleinert sind und aus dem überschüssiges Wasser und Öl entfernt sind;
- einen Zerkleinerungsschritt des spröden Preßlings (C) zum weiteren feinen Zerkleinern der Schleifspäne und zum Mischen der entstandenen Schleifspäne mit einem Verfestigungs-Hilfsmittel (D), um ein Pulver (E) zu erhalten, das das Verfestigungs-Hilfsmittel (D) enthält;
- einen Brikettherstellungsschritt durch Kompressions-Formen einer bestimmten Menge des Pulvers (E) für die Verfestigung; und
- einen Trocknungsschritt des entstandenen Briketts (A).

2. Verfahren nach Anspruch 1,
wobei als Verfestigungs-Hilfsmittel (D) zumindest ein Material verwendet wird, das aus der Gruppe ausgewählt ist, die aus Reiskleie, Restmelassen, Stärken, Branntkalk, kolloidalem Siliciumdioxid, Sodasilicat, Aluminiumphosphat, Vinylacetatschlamm, Asphaltemulsion und Bentonit besteht.

3. Verfahren nach Anspruch 1 oder 2,
wobei das Verfestigungs-Hilfsmittel (D) in einer Menge von 2 bis 30 Gew.-% eingemischt wird.

4. Verfahren nach einem der Ansprüche 1 bis 3,
wobei beim Mischschritt die entstandenen Schleifspäne mit Koks und einem Verfestigungs-Hilfsmittel (D) gemischt werden, um ein Pulver (E) zu erhalten, das den Koks und Verfestigungs-Hilfsmittel (D) enthält.

5. Verfahren nach einem der Ansprüche 1 bis 4,
wobei der zerkleinerte spröde Preßling (C) ferner mit wiedergewonnenen Staubmaterialien gemischt wird, die bei einem Stahlherstellungsprozeß aufgefangen werden.

6. Verfahren nach Anspruch 5,
wobei die wiedergewonnenen Staubmaterialien in einer Menge von 10 bis 30 Gew.-% eingemischt werden.

7. Verfahren nach einem der Ansprüche 1 bis 6,
wobei das Verfestigungs-Hilfsmittel (D) zumindest ein Material ist, das aus der Gruppe ausgewählt ist, die aus Reiskleie, Restmelassen, Stärken, Branntkalk, kolloidalem Siliciumdioxid, Sodasilicat, Aluminiumphosphat, Vinylacetatschlamm, Asphaltemulsion und Bentonit besteht.

8. Verfahren nach einem der Ansprüche 1 bis 7,
wobei das Verfestigungs-Hilfsmittel (D) in einer Menge von 1 bis 10 Gew.-% eingemischt wird.

9. Verfahren nach einem der Ansprüche 4 bis 8,
wobei der Koks in einer Menge von 5 bis 50 Gew.-% eingemischt wird.

10. Verfahren nach einem der Ansprüche 1 bis 9,
wobei der Wassergehalt der verwendeten baumwollartigen Aggregate (B) bei weniger als 50 Gew.-% und deren Ölgehalt bei weniger als 10 Gew.-% eingestellt werden.

11. Verfahren nach einem der Ansprüche 1 bis 10,
wobei der Wassergehalt des spröden Preßlings (C) bei 2 bis 12 Gew.-% und dessen Ölgehalt bei 1 bis 5 Gew.-% eingestellt werden.

12. Verfahren nach einem der Ansprüche 1 bis 11,
wobei das Brikett (A) unmittelbar nach dem Kompressions-Formungsschritt einem
schnellen Abkühlen unterzogen wird.

13. Verfahren nach einem der Ansprüche 1 bis 12,
wobei als Brikett (A) ein Produkt erhalten wird, das im wesentlichen kissenartig geformt ist.

14. Verfahren nach einem der Ansprüche 1 bis 13,
wobei als Schleifspäne ein Material verwendet wird, das nicht weniger als 0,2 Gew.-% Kohlenstoff enthält.

## Revendications

1. Procédé de formation d'une briquette à utiliser comme matériau de production d'acier, comprenant les étapes suivantes dans cet ordre:
- une étape de moulage par compression d'agrégats de type coton (B) contenant des écailles de meulage provenant d'un métal à base de fer et un fluide de meulage contenant de l'huile et de l'eau, formant ainsi un compact cassant (C) dans lequel les écailles de meulage fibreuses sont grossièrement cisaillées et à partir duquel l'eau et l'huile en excès sont enlevées;
- une étape de broyage du compact cassant (C) pour davantage cisailler finement les écailles de meulage, et mélanger les écailles de meulage résultantes avec un assistant de solidification (D) pour obtenir une poudre (E) contenant l'assistant de solidification (D);
- une étape de formation d'une briquette par moulage par compression d'une quantité prédéterminée de la poudre (E) pour solidification; et
- une étape de séchage de la briquette résultante (A).

2. Procédé selon la revendication 1,
dans lequel au moins un élément choisi dans le groupe consistant en les issues de riz, la mélasse de cuisine, les amidons, la chaux calcinée, la silice colloïdale, le silicate de soude, le phosphate d'aluminium, la boue d'acétate de vinyle, une émulsion d'asphalte et la bentonite est employé comme assistant de solidification (D).

3. Procédé selon la revendication 1 ou 2,
dans lequel l'assistant de solidification (D) est ajouté dans une quantité de 2 à 30 % en poids.

4. Procédé selon l'une quelconque des revendications 1 à 3,
dans lequel dans l'étape de mélange, les écailles de meulage résultantes sont mélangées avec du coke et un assistant de solidification (D) pour obtenir la poudre (E) contenant le coke et l'assistant de solidification (D).

5. Procédé selon l'une quelconque des revendications 1 à 4,
dans lequel le compact cassant broyé (C) est en outre mélangé avec des poussières de récupération collectées dans un processus de production d'acier.

6. Procédé selon la revendication 5,
dans lequel les poussières de récupération sont ajoutées dans une quantité de 10 à 30 % en poids.

7. Procédé selon l'une quelconque des revendications 1 à 6,
dans lequel l'assistant de solidification (D) est au moins choisi dans le groupe consistant en les issues de riz, la mélasse de cuisine, les amidons, la chaux calcinée, la silice colloïdale, le silicate de soude, le phosphate d'aluminium, la boue d'acétate de vinyle, une émulsion d'asphalte et la bentonite.

8. Procédé selon l'une quelconque des revendications 1 à 7,
dans lequel l'assistant de solidification (D) est ajouté dans une quantité de 1 à 10 % en poids.

9. Procédé selon l'une quelconque des revendications 4 à 8,
dans lequel le coke est mélangé dans une quantité de 5 à 50 % en poids.

10. Procédé selon l'une quelconque des revendications 1 à 9,
dans lequel les agrégats de type coton employés (B) voient leur teneur en eau ajustée à moins de 50 % en poids et leur teneur en huile à moins de 10 % en poids.

11. Procédé selon l'une quelconque des revendications 1 à 10,
dans lequel le compact cassant (C) voit sa teneur en eau ajustée à 2 à 12 % en poids et sa teneur en huile à 1 à 5 % en poids.

12. Procédé selon l'une quelconque des revendications 1 à 11,
dans lequel immédiatement après l'étape de moulage par compression, la briquette (A) est soumise à un refroidissement rapide.

13. Procédé selon l'une quelconque des revendications 1 à 12,
dans lequel un produit sensiblement en forme de coussin est obtenu en tant que briquette (A).

14. Procédé selon l'une quelconque des revendications 1 à 13,
dans lequel un matériau contenant pas moins de 0,2 % en poids de carbone est employé en tant que les écailles de meulage.
